# EUROPEAN PATENT SPECIFICATION

(11) **EP 3 590 997 B1**
(45) Date of publication and mention of the grant of the patent: **18.05.2022**
(21) Application number: 19183118.9
(22) Date of filing: 28.06.2019
(51) Int. Cl.: C08J 11/04, B29B 17/00, C08J 11/06, D01F 6/60, C08L 77/02

(54) **MANUFACTURING METHOD OF RECYCLING NYLON FIBER**
HERSTELLUNGSVERFAHREN VON RECYCLINGNYLONFASER
PROCÉDÉ DE FABRICATION DE RECYCLAGE DE FIBRE DE NYLON

(30) Priority: 29.06.2018 TW 107122660
(43) Date of publication of application: 08.01.2020
(73) Proprietor: Chain Yarn Co., Ltd., 407 Taichung City (TW)
(72) Inventor: HUANG, Kuan-Jung, 833 Kaohsiung City (TW); CHI, Po-Wen, 640 Douliu City, Yunlin County (TW); LIAO, Chun-Hung, 633 Tuku Township, Yunlin County (TW); KE, Wen-Yi, 852 Kaohsiung City (TW)
(74) Representative: Scintilla Intellectual Property Ltd

(56) References cited:
- JP-B2- 3 210 220
- US-A- 3 789 026

## Description

### BACKGROUND

### Technical Field

The present disclosure relates to a nylon fiber and a manufacturing method thereof. More particularly, the present disclosure relates to a recycling nylon fiber and a manufacturing method thereof.

### Description of Related Art

In recent years, with the rise of the global environmental issues such as the ozone layer destruction, the greenhouse effect, the acid rain, the disappearance of tropical rainforest and the desertification, human begin to realize the unlimited use of existing resources will certainly endanger the balance between the natural environment and human development. In order to achieve the sustainable development of human society, it is necessary to ensure the sustainable development of the environmental ecology.

Therefore, how to recycle the existing resources is became the goal of everyone. Take the waste carpet as an example, a few billion kilograms of the waste carpets are discarded every year in the United States. If the waste carpets are not recycled, it will require a large amount of land to land the waste carpets. In 2009, 311 million pounds of the waste carpets are recycled by Evergreen Recycling Company of the United States, of which 246 million pounds of the waste carpets can be recycled. The recycling ratio of the waste carpets in 2009 exceeded that in 2008. Evergreen Recycling Company of the United States plans to increase the recycling ratio by 20~25% in 2012. The main material of the waste carpet is nylon fiber. The common nylon fiber includes a nylon 6 fiber and a nylon 66 fiber. At present, there is a high technical difficulty in recycling the nylon fiber to produce the high quality fiber. It is known that some companies have developed a chemical decomposition technical solution for recycling the nylon fiber, which mixes the recycling nylon fiber performed the chemical decomposition treatment with the new material (that is non-recycling waste) to recycle. The recoverability rate of the nylon fiber has grown significant due to the efforts of the aforementioned companies.

However, the aforementioned method requires performing the chemical treatment to the recycling nylon fiber for subsequent use, and the method is complicated in the process. Furthermore, the aforementioned method requires adding the new material, that is, the product obtained is not 100% recycling nylon waste product.

Moreover, due to the process, the current common nylon fiber waste includes a non-oiled nylon fiber waste and an oiled nylon fiber waste. The non-oiled nylon fiber waste can be melted and granulated directly, and the nylon particles (or slices) obtained thereof can be spun directly. However, when the nylon particles obtained from the oiled nylon fiber waste after melting and granulating are applied to the spinning, the ratio of fiber break is too high to cause the low yield. Therefore, the nylon particles obtained from the oiled nylon fiber waste are not suitable as the spinning materials, can only be sold as the general plastics and products, and are unable to obtain a better selling price.

JP3210220B2 discloses a method of recycling fibrous waste of thermoplastic fibers such as polyamide fibers comprising the steps of: cutting the fibers to a length of 5-20 mm; washing the cut fibers with water so as to decrease the amount of oil adhered to the fibers to less than 0.2 wt%; dehydrating and squeezing the fibers between a pair of squeezing rollers to bring down the moisture content to less than 5%; charging the fibers to a granulator to form a plurality of pellets; and using the pellets for melt spinning.

### SUMMARY

According to one aspect of the present disclosure, a manufacturing method of a recycling nylon fiber includes steps as follows. A nylon fiber waste is provided, wherein the nylon fiber waste is an oiled nylon 6 fiber waste or an oiled nylon 66 fiber waste. A cutting step is performed, wherein the nylon fiber waste is cut so as to form a plurality of nylon fiber debris. A washing step is performed, wherein the nylon fiber debris are washed so as to reduce an oil content of the nylon fiber debris to less than 0.22 wt%. A dehydrating and squeezing step is performed, wherein moisture of the nylon fiber debris is removed so as to form a plurality of nylon films, and a moisture content of the nylon films is less than or equal to 4 wt%. A melting and granulating step is performed, wherein the nylon films are melted and granulated so as to form a plurality of recycling nylon particles. A melting and spinning step is performed, wherein the recycling nylon particles are melted and spun so as to obtain the recycling nylon fiber. The melting and spinning step comprises steps as follows. A melting step is performed, wherein the recycling nylon particles are melted so as to form a spun liquid. A fiber spitting step is performed, wherein the spun liquid is passed through a spinneret plate so as to form a plurality of nascent fibers. A cooling step is performed, wherein the nascent fibers are cooled so as to form a plurality of solidified fibers. A collecting and oiling step is performed, wherein the solidified fibers are collected and oiled so as to form a bundled fiber. A drawing step is performed, wherein the bundled fiber is drawn so as to form a stretched fiber, and a draw ratio of the drawing step ranges from 1.2 to 1.5. A winding step is performed, wherein the stretched fiber is wound around a cylindrical element so as to obtain the recycling nylon fiber.

According to the manufacturing method of the recycling nylon fiber of the foregoing aspect, the nylon fiber waste can include a nylon 6 full-dull fiber, a nylon 6 semi-dull fiber, a nylon 6 dull fiber, a nylon 6 color fiber, a nylon 66 full-dull fiber, a nylon 66 semi-dull fiber, a nylon 66 dull fiber, a nylon 66 high-tenacity fiber, a nylon 66 high-tenacity color fiber, a nylon 66 fine denier high-tenacity fiber, a nylon 6 fish net fiber waste, a nylon 66 fish net fiber waste, a nylon 6 cloth waste or a nylon 66 cloth waste.

According to the manufacturing method of the recycling nylon fiber of the foregoing aspect, a maximum length of the nylon fiber debris can range from 3 cm to 5 cm.

According to the manufacturing method of the recycling nylon fiber of the foregoing aspect, a washing time of the washing step can range from 10 minutes to 20 minutes.

According to the manufacturing method of the recycling nylon fiber of the foregoing aspect, the dehydrating and squeezing step can include steps as follows. A dehydrating step is performed, wherein the nylon fiber debris are dehydrated so as to reduce the moisture content of the nylon fiber debris to less than 10 wt%. A squeezing step is performed, wherein the nylon fiber debris performed the dehydrating step are squeezed so as to form the nylon films.

According to the manufacturing method of the recycling nylon fiber of the foregoing aspect, the manufacturing method of the recycling nylon fiber can further include the step as follows. A drying step is performed, wherein the recycling nylon particles are dried, and the moisture content of the recycling nylon particles ranges from 300 ppm to 700 ppm.

According to the manufacturing method of the recycling nylon fiber of the foregoing aspect, the drying step is performed under a temperature ranging from 70°C to 85°C for 1 day to 3 day.

According to the manufacturing method of the recycling nylon fiber of the foregoing aspect, the recycling nylon fiber can be a partially oriented fiber or a fully oriented fiber.

According to another aspect of the present disclosure, a recycling nylon fiber is provided. The recycling nylon fiber is made by the manufacturing method of the recycling nylon fiber according to the aforementioned aspect.

### BRIEF DESCRIPTION OF THE DRAWINGS

The present disclosure can be more fully understood by reading the following detailed description of the embodiment, with reference made to the accompanying drawings as follows:
Fig. 1 is a flow chart of a manufacturing method of a recycling nylon fiber according to one embodiment of the present disclosure.
Fig. 2 is a flow chart of the step 140 in Fig. 1.
Fig. 3 is a flow chart of the step 160 in Fig. 1.
Fig. 4 is a schematic diagram of a melting and spinning equipment of the step 160 in Fig. 3.
Fig. 5 is a flow chart of a manufacturing method of a recycling nylon fiber according to another embodiment of the present disclosure.

### DETAILED DESCRIPTION

The term "fiber" means the product obtained by a melting and spinning step, and the fibers may have different names according to the different characteristics. For example, according to the different shape and structure, the fiber can be divided into a monofiber, a multi-fiber, a short-fiber, a double fiber and a composite fiber; according to the different gloss, the fiber can be divided into a full-dull fiber, a semi-dull fiber and a dull fiber. In other words, "fiber" is a general term for the different fibers (that is the generic term) of the present disclosure.

### Manufacturing Method of a Recycling Nylon Fiber

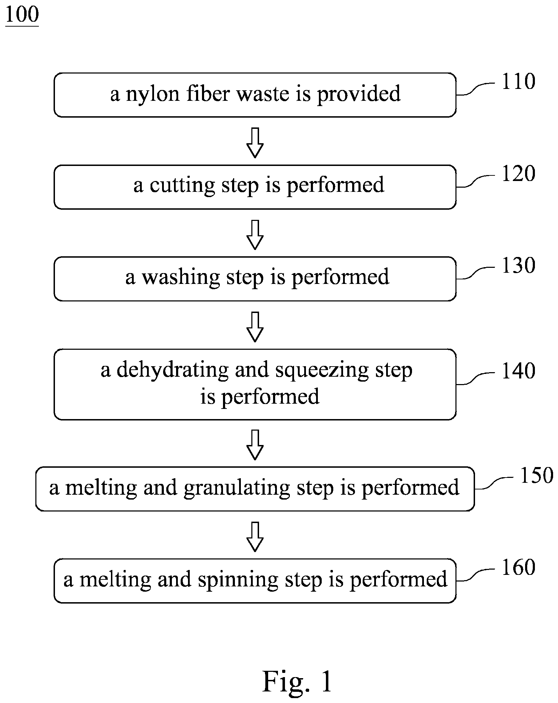

Please refer to Fig. 1. Fig. 1 is a flow chart of a manufacturing method of a recycling nylon fiber 100 according to one embodiment of the present disclosure. The manufacturing method of the recycling nylon fiber 100 includes a step 110, a step 120, a step 130, a step 140, a step 150 and a step 160.

In the step 110, a nylon fiber waste is provided, wherein the nylon fiber waste is an oiled nylon 6 fiber waste or an oiled nylon 66 fiber waste. The aforementioned "oiled" refers to the step which is for oiling the nylon fiber waste by an oiling roller or an oiling nozzle in the preparation process. The techniques of how to oil the nylon fiber waste by the oiling roller or the oiling nozzle and the types of the oil can be used are conventional in the field of spinning, and will not be described herein.

In the step 120, a cutting step is performed, wherein the nylon fiber waste is cut so as to form a plurality of nylon fiber debris.

In the step 130, a washing step is performed, wherein the nylon fiber debris are washed so as to reduce an oil content of the nylon fiber debris to less than 0.22 wt%.

In the step 140, a dehydrating and squeezing step is performed, wherein moisture of the nylon fiber debris is removed so as to form a plurality of nylon films, and a moisture content of the nylon films is less than or equal to 4 wt%.

In the step 150, a melting and granulating step is performed, wherein the nylon films are melted and granulated so as to form a plurality of recycling nylon particles.

In the step 160, a melting and spinning step is performed, wherein the recycling nylon particles are melted and spun so as to obtain the recycling nylon fiber.

Therefore, the nylon fiber waste used in the manufacturing method of the recycling nylon fiber 100 of the present disclosure is the oiled nylon 6 fiber waste or the oiled nylon 66 fiber waste. By processing appropriate treatment of the nylon fiber waste, the recycling nylon particles formed by the melting and granulating step are favorable for applying to the spinning, and the price of the product can be raised. Furthermore, the manufacturing method of the recycling nylon fiber of the present disclosure does not perform a chemical treatment of the nylon fiber waste before performing the melting and granulating step, and the process is simple.

The details of the manufacturing method of the recycling nylon fiber 100 will be described in the following.

In the step 110, the nylon fiber waste can include but is not limited to a nylon 6 full-dull fiber, a nylon 6 semi-dull fiber, a nylon 6 dull fiber, a nylon 6 color fiber, a nylon 66 full-dull fiber, a nylon 66 semi-dull fiber, a nylon 66 dull fiber, a nylon 66 high-tenacity fiber (fiber strength > 8.5 g/d), a nylon 66 high-tenacity color fiber (fiber strength > 8.0 g/d), a nylon 66 fine denier high-tenacity fiber (fiber strength > 7.5 g/d), a nylon 6 fish net fiber waste, a nylon 66 fish net fiber waste, a nylon 6 cloth waste or a nylon 66 cloth waste. Specifically, the nylon fiber waste can be a secondary long fiber recycled by the customer, a secondary long fiber or a nylon fish net fiber waste recycled by the process. The aforementioned "secondary" refers to the tailings in the production, that is, the quality does not reach to AA grade. AA grade refers to the fiber without the fiber break, the spinning cake without cast off and the generation without the mesh. Before performing the step 110, the recycled nylon fiber waste can be classified first, for example, the nylon 6 full-dull fiber is classified into one category, the nylon 6 semi-dull fiber is classified into another category, the nylon 6 dull fiber is classified into the other category, and so on. After the classification, the subsequent steps are performed respectively. In other words, classifying the nylon fiber waste in the step 110 into the same category is favorable for controlling the conditions of the melting and granulating step, and improving the yield and quality of the recycling nylon fiber.

In the step 120, a maximum length of the formed nylon fiber debris can range from 3 cm to 5 cm, and it is favorable for reducing the oil content of the nylon fiber debris in the subsequent washing step. The step 120 can be performed in a shredder. In addition, the nylon fiber waste in the step 110 can be conveyed to the shredder in the step 120 by using a conveyor belt.

In the step 130, the washing time of the washing step can range from 10 minutes to 20 minutes. The step 130 can be performed in a washing tank. In addition, the nylon fiber debris in the step 120 can be conveyed to the washing tank in the step 130 by using a conveyor belt.

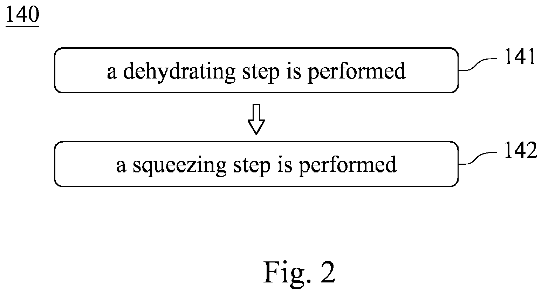

The step 140 can be dehydrated in two stages. Please refer to Fig. 2, which is a flow chart of the step 140 in Fig.1. In Fig. 2, the step 140 includes a step 141 or a step 142.

In the step 141, a dehydrating step is performed, wherein the nylon fiber debris are dehydrated so as to reduce the moisture content of the nylon fiber debris to less than 10 wt%. The step 141 can be performed in a dehydrator.

In the step 142, a squeezing step is performed, wherein the nylon fiber debris performed the dehydrating step are squeezed so as to form the nylon films, and the moisture content of the nylon films is less than or equal to 4 wt%. The step 142 can be performed in a squeezing machine.

In the step 150, the recycling nylon particles are obtained by granulating the nylon films into an extruder, and the granulating conditions can be adjusted according to the application of the recycling nylon particles, and according to non-generally non recycling nylon particles. The obtained recycling nylon particles can be packaged first to store, for example, the package can be a space package by gravity. The recycling nylon particles are taken out from the package when they are used (as in the step 160).

In the step 160, the recycling nylon fiber can be a partially oriented fiber or a fully oriented fiber according to the conditions of the melting and spinning step.

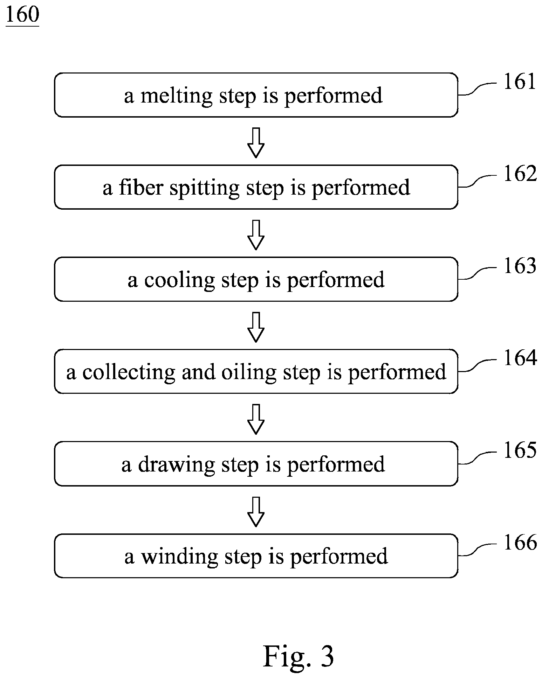

Please refer to Fig. 3, which is a flow chart of the step 160 in Fig.1. In Fig.3, the step 160 includes a step 161, a step 162, a step 163, a step 164, a step 165 and a step 166.

In the step 161, a melting step is performed, wherein the recycling nylon particles are melted so as to form a spun liquid. The temperature of the melting step can be but is not limited to 260°C to 300°C.

In the step 162, a fiber spitting step is performed, wherein the spun liquid is passed through a spinneret plate to form a plurality of nascent fibers.

In the step 163, a cooling step is performed, wherein the nascent fibers are cooled so as to form a plurality of solidified fibers. The temperature of the cooling step can range from 13°C to 20°C.

In the step 164, a collecting and oiling step is performed, wherein the solidified fibers are collected and oiled so as to form a bundled fiber. The collecting and oiling step can be oiled by the oiling roller or the oiling nozzle.

In the step 165, a drawing step is performed, wherein the bundled fiber is drawn so as to form a stretched fiber. The draw ratio of the drawing step ranges from 1.2 to 1.5. The draw ratio is calculated as the output speed divided by the input speed. When the draw ratio is less than 1.2, the fiber is broken easily. When the draw ratio is larger than 1.5, the fiber is over-stretched easily to cause the solidified fibers to break. In addition, the drawing step can further include a heating step performed at the temperature of 145°C to 200°C, whereby, the solidified fibers can be heat set. When the temperature is too high, the solidified fibers are shaken intensely on a drawing roller, and the tension is too small to hang the fiber. When the temperature is too low, the heat setting of the solidified fibers is insufficient, the internal stress of the molecular chain is increased, and the formation of the spinning cake is difficult to control. The physical properties of the bundled fiber, such as strength or draw ratio, can be changed by the drawing step to convert the bundled fiber into the stretched fiber.

In the step 166, a winding step is performed, wherein the stretched fiber is wound around a cylindrical element so as to form the recycling nylon fiber. The winding step can wind the stretched fiber at a rotational speed of 2500 m/min to 5000 m/min. The physical properties of the stretched fiber, such as strength or draw ratio, can be changed by the winding step to convert the stretched fiber into the recycling nylon fiber.

Furthermore, the conditional parameters of the step 161 to the step 166 can be adjusted correspondingly according to the type of the recycling nylon particles. More specifically, when the nylon fiber waste in the step 110 is the nylon 6 full-dull fiber, the recycling nylon particles formed by the step 150 are the nylon 6 full-dull particles. When the nylon fiber waste in the step 110 is the nylon 6 semi-dull fiber, the recycling nylon particles formed by the step 150 are the nylon 6 semi-dull particles. When the nylon fiber waste in the step 110 is the nylon 66 semi-dull fiber, the recycling nylon particles formed by the step 150 are the nylon 66 semi-dull particles, and so on. Conditional parameters for the different types of the recycling nylon particles are different, so the conditional parameters can be adjusted correspondingly according to the type of the recycling nylon particles. For example, in the step 161, the melting points of the nylon 66 semi-dull particles and the nylon 6 semi-dull particles are different, and thus the temperature of the melting step can be adjusted correspondingly according to the melting point of the recycling nylon particles. The technique for adjusting the conditional parameters of the step 161 to the step 166 according to the properties of the recycling nylon particles is well known in the art and will not be described herein.

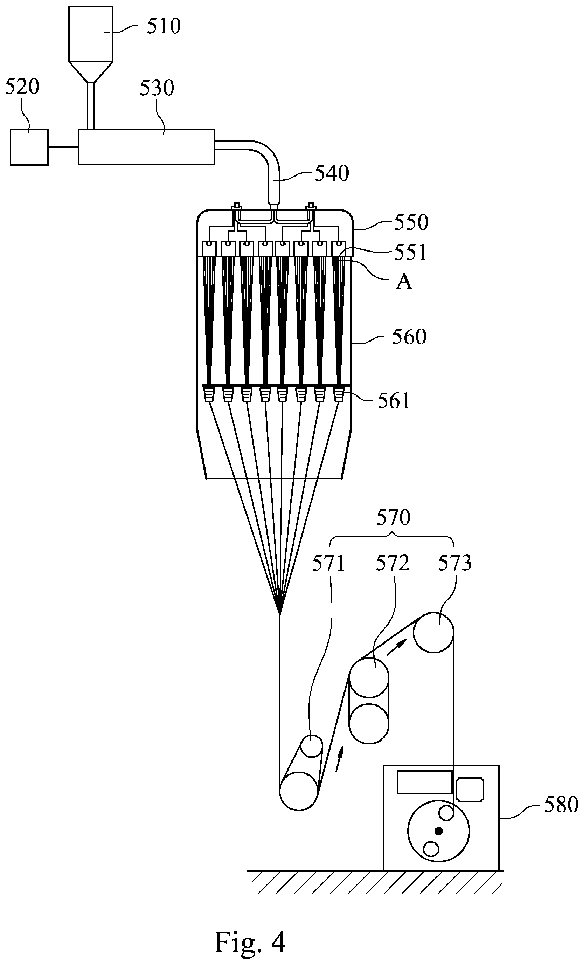

Please refer to Fig. 4, which is a schematic diagram of a melting and spinning equipment of the step 160 in Fig. 3. In Fig. 4, the melting and spinning equipment includes a feeding tank 510, a servo motor 520, an extruder 530, a manifold 540, a spinning beam 550, a cooling device 560, a drawing device 570 and a winding device 580.

When the step 161 is performed, the recycling nylon particles are put into the feeding tank 510, and then transferred into the extruder 530 from the feeding tank 510. The recycling nylon particles are melted in the extruder 530 so as to form the spun liquid. The temperature for melting of the extruder 530 can range from 260°C to 300°C.

Afterward, a screw (not shown) within the extruder 530 is driven by the servo motor 520 so as to extrude the spun liquid from the extruder 530 into the manifold 540. The temperature of the manifold 540 can be controlled in the range of 260°C to 300°C, so that the solidification of the spun liquid can be prevented before the spun liquid enters into the spinning beam 550.

When the step 162 is performed, the spun liquid flows into the spinning beam 550, and the spun liquid is dispensed by a metering pump (not shown) to distribute to each spinning port 551 via the distribution line. The spun liquid is passed through the spinneret plate (not shown) so as to form a nascent fiber A, wherein the spinneret plate is disposed in the spinning port 551 (its reference numeral is omitted). The temperature of the spinning beam 550 can be controlled in the range of 260°C to 300°C.

When the step 163 is performed, the spun liquid is cooled by the cooling device 560 so as to form the solidified fibers. The cooling device 560 can provide the cooling air with the temperature ranges from 13°C to 20°C, the wind speed ranges from 20 m/min to 100 m/min, and the relative humidity ranges from 45% to 65%.

When the step 164 is performed, the solidified fibers are collected and oiled by an oiling device 561 (the oiling roller or the oiling nozzle) so as to form the bundled fiber. The technique of collecting and oiling the solidified fibers is well known in the art and will not be described herein.

When the step 165 is performed, the bundled fiber is drawn by the drawing device 570 so as to form the stretched fiber. In the embodiment, the drawing device 570 includes a first godet roller assembly 571, a second godet roller assembly 572 and a third godet roller assembly 573. The physical properties, such as strength or draw ratio, of the recycling nylon fiber can be improved by the multistage draw. In the calculation of the draw ratio, the input speed refers to the rotational speed of the first godet roller assembly in the drawing device 570, and in the embodiment, the input speed is the rotational speed of the first godet roller assembly 571. The output speed refers to the rotational speed of the last godet roller assembly in the drawing device 570, and in the embodiment, the output speed is the rotational speed of the third godet roller assembly 573. The draw ratio of the drawing step ranges from 1.2 to 1.5. Furthermore, at least one godet roller assembly of the first godet roller assembly 571, the second godet roller assembly 572 and the third godet roller assembly 573 can provide the heating function, and the bundled fiber can be heat set thereby. The physical properties of the bundled fiber, such as strength or draw ratio, can be changed by the drawing step to convert the bundled fiber into the stretched fiber.

When the step 166 is performed, the stretched fiber is wound around the cylindrical element by the winding device 580 to form the spinning cake (not shown), the winding device 580 can provide the rotational speed in the range of 2500 m/min to 5000 m/min for winding the stretched fiber. After the winding step, the physical properties of the stretched fiber are changed to convert the stretched fiber into the recycling nylon fiber. In other words, the fiber of the spinning cake is formed by the winding device 580 is the recycling nylon fiber.

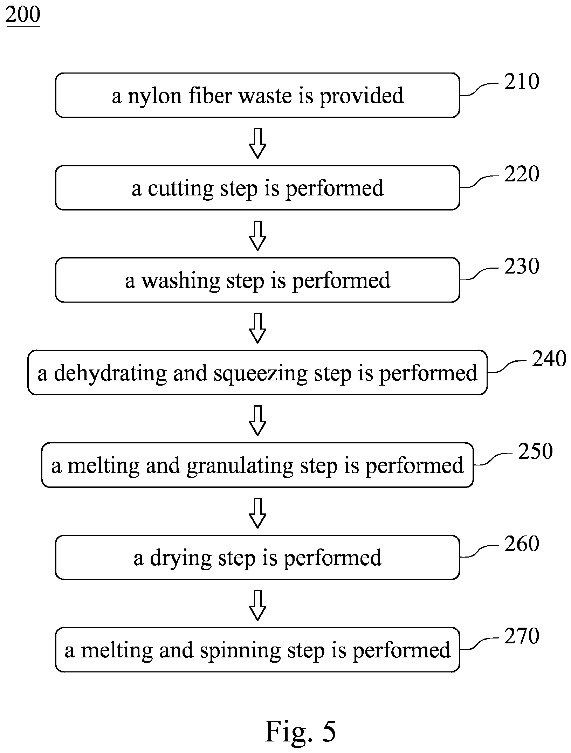

Please refer to Fig. 5, which is a flow chart of a manufacturing method of a recycling nylon fiber 200 according to another embodiment of the present disclosure. In Fig. 5, the manufacturing method of the recycling nylon fiber 200 includes a step 210, a step 220, a step 230, a step 240, a step 250, a step 260 and a step 270.

The step 210 is for providing a nylon fiber waste, the step 220 is for performing a cutting step, the step 230 is for performing a washing step, the step 240 is for performing a dehydrating and squeezing step, the step 250 is for performing a melting and granulating step, and the step 270 is for performing a melting and spinning step. The detail of the step 210 to the step 250 and the step 270 can refer to the step 110 to the step 160 of Fig. 1, and will not be repeated herein.

In the step 260, a drying step is performed, wherein the recycling nylon particles obtained in the step 250 are dried, and the moisture content of the recycling nylon particles ranges from 300 ppm to 700 ppm. Furthermore, the drying step is performed under a temperature ranging from 70°C to 85°C for 1 day to 3 day. The drying step can be performed in a drying tower. The recycling nylon particles of the step 250 can be delivered to the drying tower of the step 260 by using a conveying windmill. The dried recycling nylon particles can be packaged first to store, for example, the package can be a space package by gravity. The recycling nylon particles are taken out from the package, when they are used (as in the step 270).

### A Recycling Nylon Fiber

A recycling nylon fiber of the present disclosure is provided. The recycling nylon fiber of the present disclosure can be made by the manufacturing method of the recycling nylon fiber according to the aforementioned aspect. The recycling nylon fiber of the present disclosure is spun by using the nylon particles as the materials formed by the nylon fiber waste completely. In other words, the recycling nylon fiber of the present disclosure is 100% recycling nylon fiber so as to be favorable for the recycle of the nylon fiber waste to satisfy the environmental appeal.

### Method for Measuring the Properties

Evaluation of the frequency of the broken fiber: the frequency of broken fiber is evaluated as the frequency of broken fiber within 24 hours. If the frequency of the broken fiber is 1 to 3 times, it belongs to AA grade, and the evaluation of AA grade is great. If the frequency of the broken fiber is 4 to 6 times, it belongs to A grade, and the evaluation of A grade is normal. If the frequency of the broken fiber is 7 times or more, it belongs to B grade, and the evaluation of B grade is poor.

AA efficiency (%): the AA efficiency refers to the production yield of AA grade, and is calculated as following formula: AA efficiency (%) = [(number of the fibers are AA grade) / (number of the fibers are AA grade + number of fibers are not AA grade)] x 100%. AA grade refers to the fiber without the fiber break, the spinning cake without cast off and the generation without the mesh.

Oil Pick-Up (OPU) (%): the OPU means the weight ratio of the oil content in the fiber measured by Nuclear Magnetic Resonance (NMR), which is expressed as a percentage.

### Examples and Comparative Examples

### <Example 1>

A nylon fiber waste is provided, wherein the nylon fiber waste is an oiled nylon 6 full-dull fiber in Example 1. The nylon 6 full-dull fiber is cut by a shredder so as to form the nylon fiber debris, and a maximum length of the nylon fiber debris ranges from 3 cm to 5 cm. Next, the nylon fiber debris are washed by a washing tank for 20 minutes so as to reduce the oil content of the nylon fiber debris to less than 0.22 wt%, and then the nylon fiber debris are dehydrated by the dehydrator so as to reduce the moisture content of the nylon fiber debris to less than 10 wt%. The dehydrated nylon fiber debris are squeezed by the squeezing machine so as to form the nylon films. The moisture content of the nylon films is less than or equal to 4 wt%, and the recycling nylon particles are obtained by melting and granulating the nylon films into an extruder. Then, the nylon particles are performed the melting and spinning step, wherein the temperature of the melting step is 265°C. In the cooling step, the cooling air with the temperature is 17°C, the wind speed is 30 m/min, and the relative humidity is 65% is provided for cooling. The draw ratio of the drawing step is 1.2, and the rotational speed of the winding step is 4200 m/min so as to obtain a recycling nylon fiber of Example 1. Specifically, the recycling nylon fiber of Example 1 is a recycling nylon 6 full-dull fiber.

### <Example 2>

In Example 2, the nylon fiber waste is the oiled nylon 6 semi-dull fiber, and the conditional parameters in the melting and spinning step are changed as list in Table 1, and the other steps and conditions of Example 2 are the same as that of Example 1 so as to obtain the recycling nylon fiber of Example 2. Specifically, the recycling nylon fiber of Example 2 is a recycling nylon 6 semi-dull fiber.

### <Example 3>

In Example 3, the nylon fiber waste is the oiled nylon 6 dull fiber, and the conditional parameters in the melting and spinning step are changed as list in Table 1, and the other steps and conditions of Example 3 are the same as that of Example 1 so as to obtain the recycling nylon fiber of Example 3. Specifically, the recycling nylon fiber of Example 3 is a recycling nylon 6 dull fiber.

### <Example 4>

In Example 4, the nylon fiber waste is the oiled nylon 66 full-dull fiber, and the conditional parameters in the melting and spinning step are changed as list in Table 1, and the other steps and conditions of Example 4 are the same as that of Example 1 so as to obtain the recycling nylon fiber of Example 4. Specifically, the recycling nylon fiber of Example 4 is a recycling nylon 66 full-dull fiber.

### <Example 5>

In Example 5, the nylon fiber waste is the oiled nylon 66 semi-dull fiber, and the conditional parameters in the melting and spinning step are changed as list in Table 1, and the other steps and conditions of Example 5 are the same as that of Example 1 so as to obtain the recycling nylon fiber of Example 5. Specifically, the recycling nylon fiber of Example 5 is a recycling nylon 66 semi-dull fiber.

### <Example 6>

In Example 6, the nylon fiber waste is the oiled nylon 66 dull fiber, and the conditional parameters in the melting and spinning step are changed as list in Table 1, and the other steps and conditions of Example 6 are the same as that of Example 1 so as to obtain the recycling nylon fiber of Example 6. Specifically, the recycling nylon fiber of Example 6 is a recycling nylon 66 dull fiber.

### <Comparative Example 1>

Compared with Example 1, the washing step and the dehydrating and squeezing step are omitted to manufacture Comparative Example 1, and the other steps and conditions of Comparative Example 1 are the same as that of Example 1 so as to obtain the recycling nylon fiber of Comparative Example 1. Specifically, the recycling nylon fiber of Comparative Example 1 is a recycling nylon 6 full-dull fiber.

### <Comparative Example 2>

Compared with Example 2, the washing step and the dehydrating and squeezing step are omitted to manufacture Comparative Example 2, and the other steps and conditions of Comparative Example 2 are the same as that of Example 2 so as to obtain the recycling nylon fiber of Comparative Example 2. Specifically, the recycling nylon fiber of Comparative Example 2 is a recycling nylon 6 semi-dull fiber.

### <Comparative Example 3>

Compared with Example 3, the washing step and the dehydrating and squeezing step are omitted to manufacture Comparative Example 3, and the other steps and conditions of Comparative Example 3 are the same as that of Example 3 so as to obtain the recycling nylon fiber of Comparative Example 3. Specifically, the recycling nylon fiber of Comparative Example 3 is a recycling nylon 6 dull fiber.

### <Comparative Example 4>

Compared with Example 4, the washing step and the dehydrating and squeezing step are omitted to manufacture Comparative Example 4, and the other steps and conditions of Comparative Example 4 are the same as that of Example 4 so as to obtain the recycling nylon fiber of Comparative Example 4. Specifically, the recycling nylon fiber of Comparative Example 4 is a recycling nylon 66 full-dull fiber.

### <Comparative Example 5>

Compared with Example 5, the washing step and the dehydrating and squeezing step are omitted to manufacture Comparative Example 5, and the other steps and conditions of Comparative Example 5 are the same as that of Example 5 so as to obtain the recycling nylon fiber of Comparative Example 5. Specifically, the recycling nylon fiber of Comparative Example 5 is a recycling nylon 66 semi-dull fiber.

### <Comparative Example 6>

Compared with Example 6, the washing step and the dehydrating and squeezing step are omitted to manufacture Comparative Example 6, and the other steps and conditions of Comparative Example 6 are the same as that of Example 6 so as to obtain the recycling nylon fiber of Comparative Example 6. Specifically, the recycling nylon fiber of Comparative Example 6 is a recycling nylon 66 dull fiber.

The conditional parameters in the melting and spinning step of Example 1 to Example 6 are shown in Table 1.

| Table 1 | | | | |
|---|---|---|---|---|
| | Melting step (°C) | Cooling step (°C)/(m/min)/(%) | Draw ratio | Winding step (m/min) |
| Example 1 | 265 | 17/30/65 | 1.2 | 4200 |
| Example 2 | 265 | 17/30/65 | 1.2 | 4200 |
| Example 3 | 265 | 17/30/65 | 1.2 | 4200 |
| Example 4 | 285 | 17/30/65 | 1.2 | 4200 |
| Example 5 | 285 | 17/30/65 | 1.2 | 4200 |
| Example 6 | 285 | 17/30/65 | 1.2 | 4200 |
| Note: The temperature, the wind speed and the relative humidity of the cooling air are listed in sequence in the cooling step. | | | | |

The results of the OPU of the initial nylon fiber waste and the washed nylon fiber debris of Example 1 to Example 6 are shown in Table 2.

| Table 2 | | |
|---|---|---|
| | Nylon fiber waste OPU (%) | Washed nylon fiber debris OPU (%) |
| Example 1 | 1.21 | 0.22 |
| Example 2 | 1.23 | 0.20 |
| Example 3 | 1.21 | 0.19 |
| Example 4 | 1.35 | 0.20 |
| Example 5 | 1.34 | 0.20 |
| Example 6 | 1.34 | 0.22 |

The results of the evaluation of the frequency of the broken fiber and AA efficiency of the recycling nylon fiber of Example 1 to Example 6 are shown in Table 3.

| Table 3 | | |
|---|---|---|
| | Evaluation of the frequency of the broken fiber | AA efficiency (%) |
| Example 1 | great | 91 |
| Example 2 | great | 93 |
| Example 3 | great | 94 |
| Example 4 | great | 87 |
| Example 5 | great | 89 |
| Example 6 | great | 86 |

The results of the evaluation of the frequency of the broken fiber and AA efficiency of the recycling nylon fiber of Comparative Example 1 to Comparative Example 6 are shown in Table 4.

| Table 4 | | |
|---|---|---|
| | Evaluation of the frequency of the broken fiber | AA efficiency (%) |
| Comparative Example 1 | normal | 73 |
| Comparative Example 2 | great | 71 |
| Comparative Example 3 | normal | 69 |
| Comparative Example 4 | poor | 61 |
| Comparative Example 5 | poor | 62 |
| Comparative Example 6 | poor | 61 |

As shown in Table 3 and Table 4, when the nylon fiber waste is the oiled nylon 6 fiber waste, the evaluation of the frequency of the broken fiber of Example 1 to Example 3 are great, and that of Comparative Example 1 to Comparative Example 3 is normal, great, and normal respectively. When the nylon fiber waste is the oiled nylon 66 fiber waste, the evaluation of the frequency of the broken fiber of Example 4 to Example 6 are great, and that of Comparative Example 4 to Comparative Example 6 are poor. The results indicate that the manufacturing method of the recycling nylon fiber of the present disclosure is favorable for reducing the frequency of the broken fiber so as to raise the yield, and the nylon fiber waste is used for spinning.

Furthermore, as shown in Table 3 and Table 4, when the nylon fiber waste is the oiled nylon 6 fiber waste, the AA efficiency of Example 1 to Example 3 is 91%, 93% and 94%, respectively, and that of Comparative Example 1 to Comparative Example 3 is 73%, 71 % and 69%, respectively. The AA efficiency of Example 1 to Example 3 is higher than that of Comparative Example 1 to Comparative Example 3. When the nylon fiber waste is the oiled nylon 66 fiber waste, the AA efficiency of Example 4 to Example 6 is 87%, 89% and 86%, respectively, and that of Comparative Example 4 to Comparative Example 6 is 61%, 62% and 61%, respectively. The AA efficiency of Example 4 to Example 6 is higher than that of Comparative Example 4 to Comparative Example 6. The results indicate that the manufacturing method of the recycling nylon fiber of the present disclosure can effectively improve the production yield of the environmentally recycling nylon fiber.

## Claims

1. A manufacturing method of a recycling nylon fiber (100, 200), comprising:
providing a nylon fiber waste (110, 210), wherein the nylon fiber waste is an oiled nylon 6 fiber waste or an oiled nylon 66 fiber waste;
performing a cutting step (120, 220), wherein the nylon fiber waste is cut so as to form a plurality of nylon fiber debris;
performing a washing step (130, 230), wherein the nylon fiber debris are washed so as to reduce an oil content of the nylon fiber debris to less than 0.22 wt%;
performing a dehydrating and squeezing step (140, 240), wherein moisture of the nylon fiber debris is removed so as to form a plurality of nylon films, and a moisture content of the nylon films is less than or equal to 4 wt%;
performing a melting and granulating step (150, 250), wherein the nylon films are melted and granulated so as to form a plurality of recycling nylon particles; and
performing a melting and spinning step (160, 270), wherein the recycling nylon particles are melted and spun so as to obtain the recycling nylon fiber, and the melting and spinning step comprises:
performing a melting step (161), wherein the recycling nylon particles are melted so as to form a spun liquid;
performing a fiber spitting step (162), wherein the spun liquid is passed through a spinneret plate so as to form a plurality of nascent fibers;
performing a cooling step (163), wherein the nascent fibers are cooled so as to form a plurality of solidified fibers;
performing a collecting and oiling step (164), wherein the solidified fibers are collected and oiled so as to form a bundled fiber;
performing a drawing step (165), wherein the bundled fiber is drawn so as to form a stretched fiber, and a draw ratio of the drawing step ranges from 1.2 to 1.5; and
performing a winding step (166), wherein the stretched fiber is wound around a cylindrical element so as to obtain the recycling nylon fiber.

2. The manufacturing method of the recycling nylon fiber (100, 200) of claim 1, wherein the nylon fiber waste comprises a nylon 6 full-dull fiber, a nylon 6 semi-dull fiber, a nylon 6 dull fiber, a nylon 6 color fiber, a nylon 66 full-dull fiber, a nylon 66 semi-dull fiber, a nylon 66 dull fiber, a nylon 66 high-tenacity fiber, a nylon 66 high-tenacity color fiber, a nylon 66 fine denier high-tenacity fiber, a nylon 6 fish net fiber waste, a nylon 66 fish net fiber waste, a nylon 6 cloth waste or a nylon 66 cloth waste.

3. The manufacturing method of the recycling nylon fiber (100, 200) of claims 1 or 2, wherein a maximum length of the nylon fiber debris ranges from 3 cm to 5 cm.

4. The manufacturing method of the recycling nylon fiber (100, 200) of any one of claims 1 to 3, wherein a washing time of the washing step ranges from 10 minutes to 20 minutes.

5. The manufacturing method of the recycling nylon fiber (100, 200) of any one of claims 1 to 4, wherein the dehydrating and squeezing step comprises:
performing a dehydrating step (141), wherein the nylon fiber debris are dehydrated so as to reduce the moisture content of the nylon fiber debris to less than 10 wt%; and
performing a squeezing step (142), wherein the nylon fiber debris performed the dehydrating step are squeezed so as to form the nylon films.

6. The manufacturing method of the recycling nylon fiber (100, 200) of any one of claims 1 to 5, further comprising:
performing a drying step (260), wherein the recycling nylon particles are dried, and the moisture content of the recycling nylon particles ranges from 300 ppm to 700 ppm.

7. The manufacturing method of the recycling nylon fiber (100, 200) of claim 6, wherein the drying step (260) is performed under a temperature ranging from 70°C to 85°C for 1 day to 3 days.

8. The manufacturing method of the recycling nylon fiber (100, 200) of any one of claims 1 to 7, wherein the recycling nylon fiber is a partially oriented fiber or a fully oriented fiber.

## Patentansprüche

1. Fertigungsverfahren einer Recycling-Nylonfaser (100, 200), umfassend:
Bereitstellen eines Nylonfaserabfalls (110, 210), wobei der Nylonfaserabfall ein geölter Nylon-6-Faserabfall oder ein geölter Nylon-66-Faserabfall ist;
Durchführen eines Schneideschritts (120, 220), wobei der Nylonfaserabfall geschnitten wird, um eine Vielzahl von Nylonfaserbruchstücken zu bilden;
Durchführen eines Waschschritts (130, 230), wobei die Nylonfaserbruchstücke gewaschen werden, um einen Ölgehalt der Nylonfaserbruchstücke auf weniger als 0,22 Gew.-% zu verringern;
Durchführen eines Dehydratisierungs- und Quetschschritts (140, 240), wobei Feuchtigkeit der Nylonfaserbruchstücke entfernt wird, um eine Vielzahl von Nylonfilmen zu bilden, und ein Feuchtigkeitsgehalt der Nylonfilme weniger als oder gleich 4 Gew,-% beträgt;
Durchführen eines Schmelz- und Granulierungsschritts (150, 250), wobei die Nylonfilme geschmolzen und granuliert werden, um eine Vielzahl von Recycling-Nylonpartikeln zu bilden; und
Durchführen eines Schmelz- und Spinnschritts (160, 270), wobei die Recycling-Nylonpartikel geschmolzen und gesponnen werden, um die Recycling-Nylonfaser zu erhalten, und wobei der Schmelz- und Spinnschritt umfasst:
Durchführen eines Schmelzschritts (161), wobei die Recycling-Nylonpartikel geschmolzen werden, um eine gesponnene Flüssigkeit zu bilden;
Durchführen eines Faserauswurfschritts (162), wobei die gesponnene Flüssigkeit durch eine Spinndüsenplatte geleitet wird, um eine Vielzahl entstehender Fasern zu bilden;
Durchführen eines Kühlschritts (163), wobei die entstehenden Fasern gekühlt werden, um eine Vielzahl von verfestigten Fasern zu bilden;
Durchführen eines Sammel- und Ölungsschritts (164), wobei die verfestigten Fasern gesammelt und geölt werden, um eine gebündelte Faser zu bilden;
Durchführen eines Reckschritts (165), wobei die gebündelte Faser gereckt wird, um eine gedehnte Faser zu bilden, und ein Verstreckungsverhältnis des Reckschritts von 1,2 bis 1,5 reicht; und
Durchführen eines Aufwicklungsschritts (166), wobei die gedehnte Faser um ein zylindrisches Element herum aufgewickelt wird, um die Recycling-Nylonfaser zu erhalten.

2. Fertigungsverfahren der Recycling-Nylonfaser (100, 200) nach Anspruch 1, wobei der Nylonfaserabfall eine Nylon-6-Vollmattfaser, eine Nylon-6-Halbmattfaser, eine Nylon-6-Mattfaser, eine Nylon-6-Farbfaser, eine Nylon-66-Vollmattfaser, eine Nylon-66-Halbmattfaser, eine Nylon-66-Mattfaser, eine Nylon-66-Hochfestfaser, eine Nylon-66-Hochfestfarbfaser, eine Nylon-66-Feindenier-Hochfestfaser, einen Nylon-6-Fischnetz-Faserabfall, einen Nylon-66-Fischnetz-Faserabfall, einen Nylon-6-Tuchabfall oder einen Nylon-66-Tuchabfall umfasst.

3. Fertigungsverfahren der Recycling-Nylonfaser (100, 200) nach Ansprüchen 1 oder 2, wobei eine maximale Länge der Nylonfaserbruchstücke von 3 cm bis 5 cm reicht.

4. Fertigungsverfahren der Recycling-Nylonfaser (100, 200) nach einem der Ansprüche 1 bis 3, wobei eine Waschzeit des Waschschritts von 10 Minuten bis 20 Minuten reicht.

5. Fertigungsverfahren der Recycling-Nylonfaser (100, 200) nach einem der Ansprüche 1 bis 4, wobei der Dehydratisierungs- und Quetschschritt umfasst:
Durchführen eines Dehydratisierungsschritts (141), wobei die Nylonfaserbruchstücke dehydratisiert werden, um den Feuchtigkeitsgehalt der Nylonfaserbruchstücke auf weniger als 10 Gew.-% zu verringern; und
Durchführen eines Quetschschritts (142), wobei die Nylonfaserbruchstücke den Dehydratisierungsschritt durchführten gequetscht werden, um die Nylonfilme zu bilden.

6. Fertigungsverfahren der Recycling-Nylonfaser (100, 200) nach einem der Ansprüche 1 bis 5, weiter umfassend:
Durchführen eines Trocknungsschritts (260), wobei die Recycling-Nylonpartikel getrocknet werden und der Feuchtigkeitsgehalt der Recycling-Nylonpartikel von 300 ppm bis 700 ppm reicht.

7. Fertigungsverfahren der Recycling-Nylonfaser (100, 200) nach Anspruch 6, wobei der Trocknungsschritt (260) unter einer Temperatur, die von 70 °C bis 85 °C reicht, für 1 Tag bis 3 Tage durchgeführt wird.

8. Fertigungsverfahren der Recycling-Nylonfaser (100, 200) nach einem der Ansprüche 1 bis 7, wobei die Recycling-Nylonfaser eine teilweise orientierte Faser oder eine vollständig orientierte Faser ist.

## Revendications

1. Procédé de fabrication d'une fibre de nylon recyclée (100, 200), comprenant :
la fourniture d'un déchet de fibre de nylon (110, 210), dans laquelle le déchet de fibre de nylon est un déchet de fibre de nylon 6 huilé ou un déchet de fibre de nylon 66 huilé ;
la réalisation d'une étape de découpage (120, 220), dans laquelle le déchet de fibre de nylon est découpé de manière à former une pluralité de débris de fibre de nylon ;
la réalisation d'une étape de lavage (130, 230), dans laquelle les débris de fibre de nylon sont lavés de manière à réduire la teneur en huile des débris de fibre de nylon à moins de 0,22 % en poids ;
la réalisation d'une étape de déshydratation et d'écrasement (140, 240), dans laquelle l'humidité des débris de fibre de nylon est éliminée de manière à former une pluralité de films de nylon, et une teneur en humidité des films de nylon est inférieure ou égale à 4 % en poids ;
la réalisation d'une étape de fusion et de granulation (150, 250), dans laquelle les films de nylon sont fondus et granulés de manière à former une pluralité de particules de nylon recyclées ; et
la réalisation d'une étape de fusion et de filage (160, 270), dans laquelle les particules de nylon recyclées sont fondues et filées de manière à obtenir la fibre de nylon recyclée, et l'étape de fusion et de filage comprend :
la réalisation d'une étape de fusion (161), dans laquelle les particules de nylon recyclées sont fondues de manière à former un liquide filé ;
la réalisation d'une étape d'éjection de fibre (162), dans laquelle le liquide filé est passé à travers une plaque de filière de manière à former une pluralité de fibres naissantes ;
la réalisation d'une étape de refroidissement (163), dans laquelle les fibres naissantes sont refroidies de manière à former une pluralité de fibres solidifiées ;
la réalisation d'une étape de prélèvement et de huilage (164), dans laquelle les fibres solidifiées sont prélevées et huilées de manière à former un faisceau de fibres ;
la réalisation d'une étape d'étirement (165), dans laquelle le faisceau de fibres est étiré de manière à former une fibre étirée, et un rapport d'étirement de l'étape d'étirement se situe dans la plage allant de 1,2 à 1,5 ; et
la réalisation d'une étape d'enroulement (166), dans laquelle la fibre étirée est enroulée autour d'un élément cylindrique de manière à obtenir la fibre de nylon recyclée.

2. Procédé de fabrication de la fibre de nylon recyclée (100, 200) selon la revendication 1, dans lequel le déchet de fibre de nylon comprend une fibre de nylon 6 entièrement mat, une fibre de nylon 6 semi-mat, une fibre de nylon 6 mat, une fibre de nylon 6 colorée, une fibre de nylon 66 entièrement mat, une fibre de nylon 66 semi-mat, une fibre de nylon 66 mat, une fibre de nylon 66 de haute ténacité, une fibre de nylon 66 colorée de haute ténacité, une fibre de nylon 66 de haute ténacité à denier fin, un déchet de fibre de nylon 6 de filet de pêche, un déchet de fibre de nylon 66 de filet de pêche, un déchet de tissu de nylon 6 ou un déchet de tissu de nylon 66.

3. Procédé de fabrication de la fibre de nylon recyclée (100, 200) selon la revendication 1 ou 2, dans lequel une longueur maximale des débris de fibre de nylon se situe dans la plage allant de 3 cm à 5 cm.

4. Procédé de fabrication de la fibre de nylon recyclée (100, 200) selon l'une quelconque des revendications 1 à 3, dans lequel un temps de lavage de l'étape de lavage se situe dans la plage allant de 10 minutes à 20 minutes.

5. Procédé de fabrication de la fibre de nylon recyclée (100, 200) selon l'une quelconque des revendications 1 à 4, dans lequel l'étape de déshydratation et d'écrasement comprend :
la réalisation d'une étape de déshydratation (141), dans laquelle les débris de fibre de nylon sont déshydratés de manière à réduire la teneur en humidité des débris de fibre de nylon à moins de 10 % en poids ; et
la réalisation d'une étape d'écrasement (142), dans laquelle les débris de fibre de nylon ayant subi l'étape de déshydratation sont écrasés de manière à former les films de nylon.

6. Procédé de fabrication de la fibre de nylon recyclée (100, 200) selon l'une quelconque des revendications 1 à 5, comprenant en outre :
la réalisation d'une étape de séchage (260), dans laquelle les particules de nylon recyclées sont séchées, et la teneur en humidité des particules de nylon recyclées se situe dans la plage allant de 300 ppm à 700 ppm.

7. Procédé de fabrication de la fibre de nylon recyclée (100, 200) selon la revendication 6, dans lequel l'étape de séchage (260) est réalisée à une température se situant dans la plage allant de 70 °C à 85 °C pendant 1 à 3 jours.

8. Procédé de fabrication de la fibre de nylon recyclée (100, 200) selon l'une quelconque des revendications 1 à 7, dans lequel la fibre de nylon recyclée est une fibre orientée partiellement ou une fibre orientée entièrement.
